# EUROPEAN PATENT APPLICATION

(11) **EP 1 236 684 A1**
(43) Date of publication of application: **04.09.2002**
(21) Application number: 01810218.6
(22) Date of filing: 02.03.2001
(51) Int. Cl.: C02F 1/32, C02F 9/00

(54) **Water purifier**

(71) Applicant: Lux Asia Pacific Pte Ltd., Singapore 409962 (SG)
(72) Inventor: Larsson, Anders, 6403 Küssnacht am Rigi (CH)
(74) Representative: Clerc, Natalia

(57) **Abstract**

A water purifier to be fed with pressurized water comprises a water inlet (3) provided with a first valve (7) for turning on/shutting off the water pressure, a water outlet (6), at least one purifier chamber (1,1',2) positioned between the water inlet (3) and the water outlet (6) and a device for reducing dripping at the water outlet (6) when the water pressure is shut off. The device for reducing dripping is a second valve (8) positioned between one of the at least one purifier chamber (1') and the water outlet (6). This prevents dripping after the water pressure has been turned off and reduces the overall pressure in the purifier chambers.

## Description

### BACKGROUND OF THE INVENTION

The present invention relates to a water purifier according to the preamble of claim 1.

There exist water purifiers with a quite simple design, where the water is forced through purifier chambers, usually containing carbon filters, particle filters and UV-lamps, using the pressure of a water distribution system being connected with the water purifier. Usually, a water inlet of the water purifier is provided with a valve in order to turn on/shut off the water pressure and therefore connect or disconnect the purifier chambers with respectively from a water pipe.

These water purifiers have the problem, that, also the water has been shut off, the water continues to drip at the water outlet of the water purifier.

Furthermore, these purifier chambers have to be opened periodically to exchange or clean the filters inside or exchange the UV-lamp. Since the pressure in the purifier chambers, especially in the filter chambers, is only decreases very slowly to atmospheric pressure, they usually are still under pressure when they are opened, with the effect, that water squirts, flows into the housing of the water purifier and splashes the surrounding items and/or persons. In addition, especially the lifetime of fine filters are reduced, when they are always exposed to full water pressure.

WO 97/05063 discloses a device for re-suction of water from the water outlet of a water purifier in order to avoid dripping. This device consists of a reservoir arranged between a filter chamber connected with a water inlet having a valve and a UV-chamber connected with a water outlet. The reservoir consists of a hose, wherein one end of the hose is open towards the atmosphere, enabling a re-suction of the water laying in the outlet pipe when the inlet valve is closed. Although this device prevents dripping and gives some kind of pressure relief to the filter chambers, it bears some disadvantages. The water is still remaining in the casing of the water purifier and can therefore still flow anywhere when the water purifier is moved. Furthermore, the reservoir needs some space within the casing of the water purifier, the housing having therefore a remarkable size.

### SUMMARY OF THE INVENTION

It is therefore an object of the present invention to provide a water purifier which avoids the above mentioned problems of dripping and remaining water pressure but which enables to build a smaller housing.

This object is achieved according to the invention by means of the features of claim 1.

The water purifier according to the invention comprises in addition to a first valve in the water inlet a second valve positioned between a purifier chamber and a water outlet. This enables to control the water flow through the at least one purifier chamber and the pressure in this chamber.

In addition to the general decrease in size of the water purifier housing, the thickness of the walls of the purifier chambers can be reduced, since the long-time pressure inside the chambers, causing fatigue, has been reduced. The thinner walls reduce the size of the water purifier as well as the prize of the apparatus.

Additional preferred embodiments are described in the dependent claims.

### BRIEF DESCRIPTION OF THE DRAWINGS

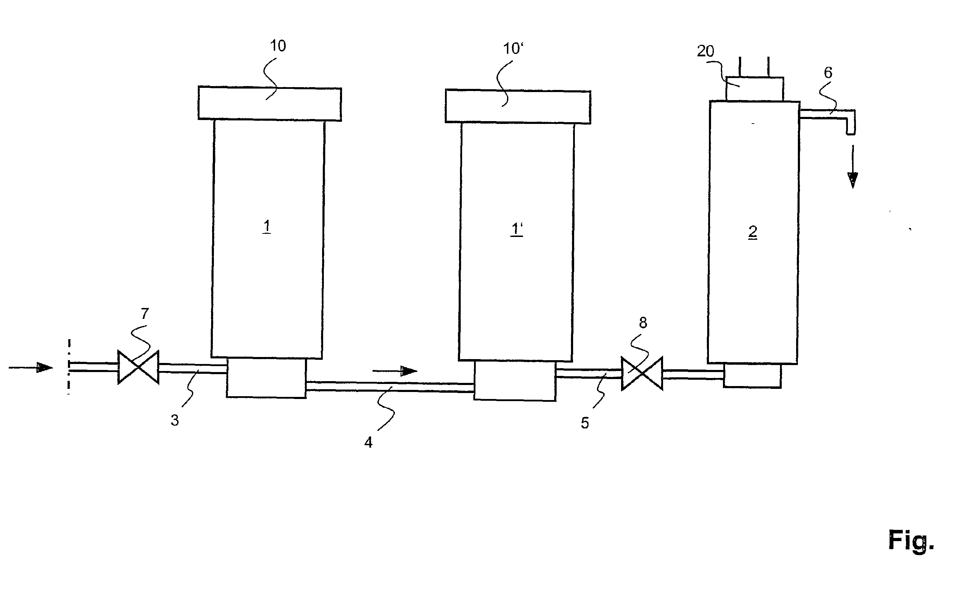

A more complete appreciation of the invention will be obtained as the same becomes better understood by reference to the following description when considered with the accompanying drawing. The figure shows a schematic view of a water purifier according to the invention.

### DESCRIPTION OF THE PREFERRED EMBODIMENTS

The figure schematically discloses a water purifier according to the invention. This water purifier has a housing in the size of a home coffee machine. In this housing at least one cylindrical purifier chamber is arranged, preferably there exist at least one filter chamber 1,1' and one UV-chamber 2. The at least one purifier chamber is connected to a water inlet 3 and a water outlet 6. The arrows in the figure represent the flow of water through the water purifier.

The water purifier preferably has more than one purifier chamber, the chambers being connected with each other by connecting water lines 4,5. Preferably, there exist at least one filter chamber 1,1' and one UV-chamber 2. In the figure, two filter chambers 1,1' are shown, wherein in direction of the water-flow the first filter chamber 1 preferably contains a particle or sediment filter and the second one contains a carbon or polishing filter. The UV-chamber 2 bears a UV-lamp. The filter chambers 1,1' are closed on their upper ends by caps 10,11 to enable the filter to be exchanged in an easy way. For the same reason the UV-lamp is penetrating the UV-chamber 2 with an upper part 20. On their lower ends, they are connected with the water inlet 3 or connecting water lines 4,5. The water outlet 6 is arranged at the upper end of the UV-chamber. Usually, this water outlet 6 is used to fill bottles or glasses with purified water.

The water inlet 2 of water purifier can be connected to a normal water distribution system, i.e. a water pipe of a house. The water inlet 2 comprises a first valve 7, in particularly a solenoid, to turn on/shut off the water pressure. In accordance to the invention, there is a second valve 8 arranged in the water connection of a purifier chamber and the water outlet 6. Preferably, the second valve 8 is arranged after the last of the filter chambers 1,1', but before the UV-chamber 6. The second valve 8 can be of an identical type as the first valve 7.

The water purifier comprises also control means, usually electronic devices, to control the valves 7,8. The control means are not described in detail, since any control means enabling a time-delayed control of valves can be used. The control means control the valves 7,8 in a way, that the second valve 8 is closed delayed to the first valve 7. The delay depends on the flow rate capability as well as on the total number of filters.

Good results have been achieved with a delay of 1 to 5 seconds, especially with a delay of at least approximately 3 seconds. This delay enables the water to flow out of the water purifier when the first valve 7 is closed, decreasing the water pressure and the amount of water inside the filter chambers. It therefore prevents an ongoing dripping at the water outlet 6. When the first valve 7 is opened again in order to obtain purified water at the outlet, the second valve 8 is opened at least approximately at the same time to avoid, that the pressure in the filter chambers increases too much.

The water purifier according to the invention enables to integrate a device for reducing dripping into a small housing.

### LIST OF THE REFERENCE NUMBERS

- 1: sediment filter chamber
- 10: cap
- 1': polishing filter chamber
- 10': cap
- 2: UV-chamber
- 20: upper part
- 3: water inlet
- 4: first connecting water line
- 5: second connecting water line
- 6: water outlet
- 7: first valve
- 8: second valve

## Claims

1. A water purifier to be fed with pressurized water, the water purifier comprising
a water inlet (3) provided with a first valve (7) for turning on/shutting off the water pressure,
a water outlet (6),
at least one purifier chamber (1,1',2) positioned between the water inlet (3) and the water outlet (6) and
a device for reducing dripping at the water outlet (6) when the water pressure is shut off,
**characterized in that**
the device for reducing dripping is a second valve (8) positioned between one of the at least one purifier chamber (1') and the water outlet (6).

2. A water purifier according to claim 1, wherein the water purifier comprises control means to close the second valve (8) delayed to the first valve (7).

3. A water purifier according to claim 2, wherein the delay is 1-5 seconds, particularly at least approximately 3 seconds.

4. A water purifier according to claim 2, wherein the delay is chosen depending on the flow rate of the at least one purifier chamber (1,1').

5. A water purifier according to claim 2, wherein the control means open the second valve (8) at least approximately at the same time as the first valve (7).

6. A water purifier according to claim 1, wherein the water purifier comprises at least two purifier chambers (1,1',2) being connected by a connecting water line (4,5), one of the chambers being a UV-chamber (2) comprising a UV-lamp and the at least one other chamber being a filter chamber (1,1'), the second valve (8) being arranged between the UV-chamber (2) and the filter chamber (1') connected to the UV-chamber (2).

7. A water purifier according to claim 2 and 6, wherein the delay is chosen depending on the flow rate capability of the at least one filter chamber (1,1') and the number of filter chambers (1,1').

8. A method to turn on/shut off a water purifier with at least one purifier chamber (1,1',2) fed with pressurized water, the water pressure being turned on/shut off using a first valve (7) arranged in a water inlet (3) of the water purifier, **characterized in that**
a second valve (8), arranged between one of the at least one purifier chamber (1,1') and a water outlet (6) is opened and closed together with the first valve (7), wherein the closing of the second valve (8) is delayed.
